# EUROPÄISCHE PATENTANMELDUNG

(11) **EP 4 361 480 A1**
(43) Veröffentlichungstag der Anmeldung: **01.05.2024**
(21) Anmeldenummer: 23205344.7
(22) Anmeldetag: 23.10.2023
(51) Int. Cl.: F16K 47/04, F16K 1/36, F16K 1/54

(54) **VENTILGLIED FÜR EIN STELLVENTIL**

(30) Priorität: 28.10.2022 DE 202022106088 U
(71) Anmelder: Samson Aktiengesellschaft, 60314 Frankfurt (DE)
(72) Erfinder: GRAENZ, Daniel, 65760 Eschborn (DE); WAID, Jonas, 64291 Darmstadt (DE)
(74) Vertreter: Puschmann Borchert Kaiser Klettner Patentanwälte Partnerschaft mbB

(57) **Zusammenfassung**

Die Erfindung betrifft ein Ventilglied (10) für ein Stellventil (12) einer prozesstechnischen Anlage, mit einem Kegelstück (14), das eine Dichtkante (16) ausbildet, die für ein Zusammenwirken mit einem Ventilsitz (26) des Stellventils (12) vorgesehen ist, und mit zumindest einer Stirnfläche (14b), die insbesondere das Kegelstück (14) an einer Seite zumindest teilweise begrenzt, wobei das Kegelstück (14) zur Veränderung eines Öffnungsquerschnitts zumindest einer Drosselstelle (34) des Stellventils (12) in Abhängigkeit einer axialen Stellung des Ventilglieds (10) dient, wobei das Kegelstück (14) in und/oder an einer relativ zu einer Mittelachse (40) des Kegelstücks (14) ausgebildeten Umfangsfläche zumindest eine Ausnehmung (18) ausbildet, die insbesondere dazu vorgesehen ist, den Öffnungsquerschnitt der Drosselstelle (34) in Abhängigkeit von der axialen Stellung des Ventilglieds (10) gegenüber dem Ventilsitz (26) zu beeinflussen, wobei die Ausnehmung (18) zumindest teilweise von einer Ausnehmungsfläche (18b) begrenzt ist. Die Erfindung zeichnet sich dadurch aus, dass zumindest ein Fluidkanal (20) ausgebildet ist, der von dem Kegelstück (14) begrenzt ist und sich von der Stirnfläche (14b) durch das Kegelstück (14) hindurch bis zu einer Seitenfläche (14a) des Kegelstücks (14) erstreckt, wobei die Seitenfläche (14a) entlang der Mittelachse des Kegelstücks (14) betrachtet vor der Dichtkante (16) angeordnet ist.

## Beschreibung

Die Erfindung betrifft ein Ventilglied für ein Stellventil gemäß der im Oberbegriff des Anspruchs 1 angegebenen Art und ein Stellventil gemäß der im Oberbegriff des Anspruchs 12 angegebenen Art.

Es gibt bekanntermaßen drei verschiedene Arten von Ventilgliedern: parabolförmige, zylindrische und V-Port Ventilglieder. V-Port Ventilglieder weisen eine näherungsweise zylindrische Grundform auf und umfassen an einer Stirnfläche ein oder mehrere weite Ausnehmungen (Ports), die sich üblicherweise zu einer entfernt gelegenen Stirnfläche hin verjüngen (V-Form). Zwischen diesen Ausnehmungen sind in Umfangsrichtung Stege ausgebildet, die jeweils als Wandbereiche mit einer im Wesentlichen zylindermantelförmigen Form ausgebildet sind und eine Führung des Ventilglieds im Ventilsitz ermöglichen. Gegenüber den parabolförmigen Ventilgliedern haben V-Port Ventilglieder Führungsflächen, über die sie unabhängig von einem Öffnungsgrad des Ventilglieds an einen Ventilsitz geführt werden können. Die V-Port Ventilglieder werden üblicherweise geschmiedet oder aus einem Werkstück herausgefräst.

Gegenüber parabolförmigen Ventilgliedern haben die V-Port Ventilglieder einen geringeren Durchfluss. Besonders sind Wirbelbildungen eines Prozessfluids bei einem Durchströmen zwischen Ventilglied und Ventilsitz zu vermeiden, da dadurch der Durchfluss weiter vermindert wird. Die Ausnehmungen des V-Port Ventilglieds weisen eine strömungsoptimierte Form auf und können nur bedingt vergrößert werden, ohne die vorteilhaften Führungseigenschaften des V-Port Ventilglieds zu verlieren oder gleichzeitig eine ausreichende Stabilität und Robustheit zu gewährleisten.

Die Erfindung betrifft die Weiterentwicklung von V-Port Ventilgliedern.

Der Erfindung liegt die Aufgabe zugrunde, ein Ventilglied für ein Stellventil gemäß der im Oberbegriff des Anspruchs 1 angegebenen Art derart weiterzubilden, dass unter Vermeidung der genannten Nachteile ein höherer Durchfluss erzielt wird.

Die Aufgabe wird durch die kennzeichnenden Merkmale des Anspruchs 1 in Verbindung mit seinen Oberbegriffsmerkmalen gelöst.

In bekannter Art und Weise umfasst ein Ventilglied für ein Stellventil einer prozesstechnischen Anlage ein Kegelstück, das eine Dichtkante ausbildet, die für ein Zusammenwirken mit einem Ventilsitz des Stellventils vorgesehen ist. Das Ventilglied umfasst eine Stirnfläche, die insbesondere das Kegelstück an einer Seite zumindest teilweise begrenzt. Das Kegelstück dient zur Veränderung eines Öffnungsquerschnitts zumindest einer Drosselstelle des Stellventils in Abhängigkeit einer axialen Stellung des Ventilglieds und bildet in und/oder an einer relativ zu einer Mittelachse des Kegelstücks ausgebildeten Umfangsfläche zumindest eine Ausnehmung aus. Die Ausnehmung ist insbesondere dazu vorgesehen, den Öffnungsquerschnitt der Drosselstelle in Abhängigkeit von der axialen Stellung des Ventilglieds gegenüber dem Ventilsitz zu beeinflussen, wobei die Ausnehmung zumindest teilweise von einer Ausnehmungsfläche begrenzt ist.

Erfindungsgemäß umfasst das Ventilglied zumindest einen Fluidkanal, der von dem Kegelstück begrenzt ist und sich von der Stirnfläche durch das Kegelstück hindurch bis zu einer Seitenfläche des Kegelstücks erstreckt, wobei die Seitenfläche entlang der Mittelachse des Kegelstücks betrachtet vor der Dichtkante angeordnet ist. Durch das Vorsehen des Fluidkanals können Wirbelbildungen zwischen Ventilglied und Ventilsitz auf einfache Weise verhindert bzw. reduziert werden. Es kann bei gleichem Öffnungshub des Stellventils ein vorteilhaft erhöhter Durchfluss erreicht werden. Insbesondere ist der Fluidkanal entlang einer Erstreckung des Fluidkanals vollständig von dem Kegelstück begrenzt.

Das Ventilglied, insbesondere das Kegelstück, umfasst vorzugsweise eine oder mehrere Führungsfläche(n), die, insbesondere bei einer Veränderung des Öffnungsquerschnitts der Drosselstelle, zu einer axialen Führung des Ventilglieds bzw. des Kegelstücks im Ventilsitz vorgesehen ist/sind. Die Umfangsfläche ist vorzugsweise durch eine oder mehrere Führungsfläche(n) und/ oder mehrere Ausnehmungsfläche(n) gebildet. Insbesondere sind/ist die zumindest eine Ausnehmungsfläche und/oder die zumindest eine Führungsfläche als eine Seitenfläche des Kegelstücks ausgebildet. Insbesondere ist der Fluidkanal derart ausgebildet, dass eine Austrittsöffnung des Fluidkanals bezogen auf die Mittelachse des Kegelstücks zumindest teilweise oder vollständig auf einer Höhe bzw. innerhalb einer axialen Längserstreckung der Ausnehmung angeordnet ist. Insbesondere ist die Stirnfläche an einer Stirnseite des Ventilglieds, insbesondere des Kegelstücks, angeordnet. Bevorzugt bildet das Kegelstück die Stirnfläche aus, insbesondere als eine Außenfläche. Vorzugsweise begrenzt die zumindest eine Stirnfläche das Kegelstück entlang der Mittelachse des Kegelstücks an einer Seite, insbesondere an einer von einer Ventilstange und/oder einer Antriebseinheit des Stellventils abgewandten Seite des Kegelstücks. Insbesondere ist das Ventilglied dazu vorgesehen, mit der Ventilstange des Stellventils verbunden zu werden.

Bevorzugt erstreckt sich eine Haupterstreckungsebene der zumindest einen Stirnfläche im Wesentlichen schräg, vorzugsweise im Wesentlichen senkrecht, zur Mittelachse des Kegelstücks. Es ist denkbar, dass die Stirnfläche im Wesentlichen eben ausgebildet ist, wobei sich insbesondere die Stirnfläche im Wesentlichen schräg, vorzugsweise im Wesentlichen senkrecht, zur Mittelachse des Kegelstücks erstreckt. Das Kegelstück bildet vorzugsweise einen Grundkörper des Ventilglieds aus. Das Ventilglied, insbesondere das Kegelstück, umfasst die Dichtkante, welche vorzugsweise als eine Kante oder ein Bereich einer Fläche ausgebildet ist, die zum Zusammenwirken mit dem Ventilsitz, insbesondere einer Kante oder Fläche des Ventilsitzes, vorgesehen ist. Die Dichtkante ist insbesondere als ein Kontaktbereich zwischen dem Ventilglied, insbesondere dem Kegelstück, und dem Ventilsitz in einem geschlossenen Zustand des Stellventils ausgebildet.

Bevorzugt sind mehrere stegförmig ausgebildete Führungsflächen vorgesehen, die insbesondere um die Mittelachse des Kegelstücks verteilt angeordnet sind. Bevorzugt begrenzt/begrenzen die Führungsfläche(n) die Ausnehmung zumindest teilweise. Es sind Ausgestaltungen des Ventilglieds mit mehr als einer Ausnehmung denkbar, wobei insbesondere entlang der Mittelachse des Kegelstücks betrachtet zwischen zwei Ausnehmungen jeweils eine Führungsfläche bzw. ein Steg angeordnet ist. Die stegförmigen Führungsflächen ermöglichen eine axiale Führung des Ventilglieds im Ventilsitz entlang einer Stellachse des Stellventils. Insbesondere ist das Ventilglied im Stellventil entlang der Stellachse zu einem Öffnen oder Verschließen der Drosselstelle bewegbar. Vorzugsweise ist die Mittelachse des Kegelstücks in einem montierten Zustand des Ventilglieds in dem Stellventil im Wesentlichen parallel zur Stellachse ausgerichtet, vorzugsweise von dieser umfasst. Es ist denkbar, dass sich die Führungsfläche(n) bzw. der/die Steg(e) bis zur Stirnseite des Kegelstücks erstreckt/erstrecken. Insbesondere ist denkbar, dass sich die Führungsfläche(n) bzw. der/die Steg(e) entlang der Mittelachse des Kegelstücks über die Stirnfläche hinaus erstrecken/erstreckt. Die Seitenfläche des Kegelstücks ist vorzugsweise senkrecht zur Mittelachse des Kegelstücks betrachtet an einer Seite des Kegelstücks angeordnet. Vorzugsweise ist die Seitenfläche des Kegelstücks im Wesentlichen schräg zur Mittelachse des Kegelstücks ausgebildet. Es sind verschiedene Ausgestaltungen der Seitenfläche des Kegelstücks denkbar, beispielsweise als eine ebene Fläche, oder als eine gebogene Fläche, oder als eine/die Führungsfläche, oder als eine/die Ausnehmungsfläche oder dergleichen. Es ist denkbar, dass das Ventilglied mehr als einen Fluidkanal umfasst, wobei die Fluidkanäle sich jeweils zu verschiedenen Seitenflächen des Kegelstücks hin erstrecken.

Vorzugsweise umfasst der Fluidkanal eine an der Stirnfläche angeordnete Eintrittsöffnung und eine Austrittsöffnung, wobei die Austrittsöffnung entlang der Mittelachse des Kegelstücks betrachtet in einem minimalen Abstand von der Dichtkante angeordnet ist, der kleiner oder gleich 66 %, vorzugsweise kleiner oder gleich 50 % und besonders bevorzugt kleiner oder gleich 40 % und ganz besonders bevorzugt kleiner oder gleich 30 %, einer axialen Erstreckung des Kegelstücks von der Dichtkante zur Stirnfläche beträgt. Durch die nahe Anordnung der Austrittsöffnung zur Dichtkante kann schon bei kleinem Öffnungshub des Ventilglieds vorteilhaft schnell ein gerichteter Fluidstrom ermöglicht werden. Es kann ein horizontales Abströmen eines Prozessfluids beim Öffnen des Stellglieds ermöglicht werden.

Bei einer Anordnung einer Austrittsöffnung des Fluidkanals an einer Führungsfläche des Stellglieds bzw. des Kegelstücks ist eine größere Entfernung der Austrittsöffnung von der Dichtkante vorteilhaft, insbesondere um durch gerichtete Fluidströmung eine Beabstandung des Ventilglieds von dem Ventilsitz aufrechtzuerhalten. Vorzugsweise beträgt der minimale Abstand der Austrittsöffnung von der Dichtkante entlang der Mittelachse des Kegelstücks betrachtet mindestens 0,5 mm, vorzugsweise mindestens 1 mm und bevorzugt mindestens 2 mm. Dadurch kann eine Leckageströmung in einem geschlossenen Zustand des Stellventils vorteilhaft verhindert werden. Vorzugsweise ist die Austrittsöffnung, entlang der Mittelachse des Kegelstücks betrachtet, in einem minimalen Abstand von der Dichtkante angeordnet, der kleiner oder gleich 66 %, vorzugsweise kleiner oder gleich 50 % und besonders bevorzugt kleiner oder gleich 40 % und ganz besonders bevorzugt kleiner oder gleich 30 % einer axialen Erstreckung des Kegelstücks zwischen einem entlang der Mittelachse des Kegelstücks ausgebildeten Ende des Kegelstücks und der Dichtkante.

Gemäß einer weiteren vorteilhaften Ausbildungsform der Erfindung ist der Fluidkanal eine an der Stirnfläche angeordnete Eintrittsöffnung und eine Austrittsöffnung, wobei die Austrittsöffnung im Bereich der Ausnehmung, insbesondere in der Ausnehmungsfläche, angeordnet ist. Hierdurch wird eine Erhöhung des Durchflusses im Bereich der Ausnehmung erreicht. Insbesondere begrenzt die Ausnehmungsfläche die Austrittsöffnung des Fluidkanals zumindest teilweise, insbesondere im Wesentlichen vollständig bzw. umfänglich. Bevorzugt erstreckt sich die Ausnehmungsfläche entlang einer Mittelachse des Fluidkanals im Bereich der Austrittsöffnung betrachtet im Wesentlichen vollständig um die Austrittsöffnung bzw. eine Querschnittsfläche der Austrittsöffnung. Vorzugsweise ist die Ausnehmungsfläche zumindest größtenteils, insbesondere in einem Bereich um die Austrittsöffnung, im Wesentlichen schräg zu einer sich senkrecht zur Mittelachse des Kegelstücks erstreckenden Ebene und im Wesentlichen schräg zur Mittelachse des Kegelstücks ausgebildet. Es ist denkbar, dass die Ausnehmungsfläche im Wesentlichen eben oder gebogen ausgebildet ist.

Bevorzugt umfasst der Fluidkanal eine an der Stirnfläche angeordnete Eintrittsöffnung und eine Austrittsöffnung, wobei zumindest eine Umfangsfläche des Kegelstücks als eine Führungsfläche ausgebildet ist, wobei die Austrittsöffnung in einem Bereich der Führungsfläche, insbesondere beabstandet von der Ausnehmung und/oder der Ausnehmungsfläche, angeordnet ist. Durch die Anordnung der Austrittsöffnung im Bereich der Führungsfläche wird bei einem vorbestimmten Öffnungshub des Ventilglieds, wenn also die Austrittsöffnung zumindest bereichsweise oberhalb des Ventilsitzes angeordnet ist, ein höherer Querschnitt für die Durchströmung erreicht. Insbesondere begrenzt die Führungsfläche die Austrittsöffnung des Fluidkanals zumindest teilweise, insbesondere im Wesentlichen vollständig bzw. umfänglich. Bevorzugt erstreckt sich die Führungsfläche entlang einer Mittelachse des Fluidkanals im Bereich der Austrittsöffnung betrachtet im Wesentlichen vollständig um die Austrittsöffnung bzw. eine Querschnittsfläche der Austrittsöffnung. Insbesondere erstreckt sich die Führungsfläche zumindest größtenteils, insbesondere in einem die Austrittsöffnung umgebenden Bereich, im Wesentlichen zylindermantelförmig um die Mittelachse des Kegelstücks. Insbesondere erstreckt sich die Führungsfläche zumindest größtenteils, insbesondere in einem die Austrittsöffnung umgebenden Bereich, konzentrisch zur Dichtkante und/oder zu einer Innenfläche bzw. Dichtkante des Ventilsitzes.

Vorzugsweise umfasst der Fluidkanal eine an der Stirnfläche angeordnete Eintrittsöffnung und eine Austrittsöffnung, wobei die Eintrittsöffnung entlang der Mittelachse des Kegelstücks betrachtet im Wesentlichen mittig auf der Mittelachse des Kegelstücks angeordnet ist. Hierdurch erfolgt die Belastung durch das Fluid zentrisch auf das Kegelstück. Dies führt zu einer höheren Stabilität des Kegelstücks. Vorzugsweise erstreckt sich der Fluidkanal ausgehend von der Eintrittsöffnung zunächst im Wesentlichen parallel zur Mittelachse des Kegelstücks. Vorzugsweise ist die Eintrittsöffnung konzentrisch zur Mittelachse des Kegelstücks angeordnet, insbesondere in einer runden bzw. elliptischen Ausgestaltung der Eintrittsöffnung.

Gemäß einer weiteren vorteilhaften Ausbildungsform der Erfindung umfasst der Fluidkanal zumindest eine Austrittsöffnung und weist im Bereich einer Austrittsöffnung des Fluidkanals eine Mittelachse auf, die zur Mittelachse des Kegelstücks in einem von 90° verschiedenen Winkel, vorzugsweise zur Dichtkante hingeneigt, ausgerichtet ist. Der Fluidkanal ist so an die geometrische Form des Ventilglieds angepasst. Bevorzugt spannen die Mittelachse des Kegelstücks und die Mittelachse des Fluidkanals im Bereich der Austrittsöffnung in zumindest einer Projektionsebene betrachtet einen von 90° verschiedenen Winkel auf. Vorzugsweise beträgt der Winkel zwischen der Mittelachse des Kegelstücks und der Mittelachse des Fluidkanals im Bereich der Austrittsöffnung mindestens 80°, vorzugsweise mindestens 70° und besonders bevorzugt mindestens 60°. Bevorzugt beträgt der Winkel zwischen der Mittelachse des Kegelstücks und der Mittelachse des Fluidkanals im Bereich der Austrittsöffnung höchstens 85°, vorzugsweise höchstens 80° und besonders bevorzugt höchstens 70°. Alternativ ist denkbar, dass die Mittelachse des Fluidkanals im Bereich der Austrittsöffnung im Wesentlichen senkrecht zur Mittelachse des Kegelstücks ausgerichtet ist.

Vorzugsweise ist der Fluidkanal derart ausgebildet, dass eine Mittelachse des Fluidkanals im Bereich der Austrittsöffnung und eine Mittelachse des Fluidkanals im Bereich der Eintrittsöffnung in zumindest einer Ebene betrachtet im Wesentlichen schräg oder senkrecht zueinander ausgerichtet sind. Bevorzugt ist der Fluidkanal gebogen oder geknickt ausgebildet. Dadurch können Verwirbelungen in Prozessstromrichtung hinter dem Ventilglied verhindert bzw. reduziert werden. Bevorzugt ist die Austrittsöffnung des Fluidkanals in Richtung, insbesondere im Wesentlichen parallel, zu einer Prozessströmungsrichtung des Stellventils ausgerichtet. Vorzugsweise bildet der Fluidkanals zumindest einen Knick oder eine Biegung aus. Bevorzugt ist der Fluidkanals vor und/oder nach dem Knick bzw. der Biegung im Wesentlichen geradlinig ausgebildet. Es sind aber auch Ausgestaltungen mit einem bereichsweise oder vollständig gewundenen Fluidkanal denkbar. Die Prozessstromrichtung ist insbesondere von einer Eingangsöffnung des Stellventils zu einer Ausgangsöffnung des Stellventils ausgebildet. Das Ventilglied, insbesondere in V-Port-Ausführung, ist vorzugsweise dazu vorgesehen, von unten bzw. von dem Ende und/oder von einer die Stirnfläche aufweisenden Unterseite des Ventilglieds bzw. des Kegelstücks angeströmt zu werden. Insbesondere ist das Ventilglied dazu vorgesehen, Prozessfluid von der Unterseite durch den zumindest einen Fluidkanal und die zumindest eine Ausnehmung zur Dichtkante hinzuleiten.

Vorzugsweise weist das Kegelstück mehrere Fluidkanäle auf, die sich jeweils von einer Stirnfläche des Kegelstücks durch das Kegelstück hindurch bis zu einer Seitenfläche des Kegelstücks erstrecken.

Hierdurch kann der Öffnungsquerschnitt des Kegelbereichs weiter erhöht werden, um einen größeren Durchfluss zu ermöglichen.

Gemäß einer weiteren vorteilhaften Ausbildungsform der Erfindung umfasst der Fluidkanal eine an der Stirnfläche angeordnete Eintrittsöffnung und mehrere Austrittsöffnungen, wobei die Austrittsöffnungen jeweils an einer Seitenfläche des Kegelstücks angeordnet sind. Hierdurch kann der Durchfluss gleichmäßig auf mehrere Bereiche des Kegelstücks bzw. in mehrere Richtungen in eine hinter dem Ventilglied angeordnete Ventilkammer des Stellventils verteilt werden. Insbesondere umfasst der Fluidkanal mehrere Verläufe, welche innerhalb des Kegelstücks, insbesondere zur Eintrittsöffnung hin, zusammenlaufen. Insbesondere in einer Ausgestaltung des Fluidkanals mit einem Knick oder einer Biegung, wobei insbesondere der Fluidkanal vor und nach dem Knick bzw. der Biegung im Wesentlichen geradlinig ausgebildet ist, ist denkbar, dass die Verläufe des Fluidkanals in einem Bereich des Knicks bzw. der Biegung zusammenlaufen. Insbesondere sind die Austrittsöffnungen des Fluidkanals entlang der Mittelachse des Kegelstücks betrachtet um die Mittelachse des Kegelstücks, insbesondere im Wesentlichen gleichmäßig, verteilt an Seitenflächen des Kegelstücks angeordnet. Alternativ oder zusätzlich ist denkbar, dass mehrere Austrittsöffnungen des Fluidkanals oder Austrittsöffnungen von mehreren Fluidkanälen in und/oder an einer/der Seitenfläche des Kegelstücks angeordnet sind, insbesondere versetzt zueinander.

Um komplexe Strukturen einfach und mit hoher Präzision fertigen zu können ist zumindest das Kegelstück mittels eines additiven Fertigungsverfahrens hergestellt. Alternativ ist denkbar, dass das Ventilglied, insbesondere zumindest das Kegelstück, durch ein Schmiede-, Guss- und/oder einem anderen, insbesondere spanenden, Herstellungsverfahren hergestellt ist. Vorzugsweise ist das Kegelstück einteilig ausgebildet und begrenzt den Fluidkanal vollständig bzw. bildet den Fluidkanal aus. Insbesondere bildet das Kegelstück die Dichtkante aus. Bevorzugt bildet das Kegelstück die Stirnfläche und die Führungsfläche(n) aus. Vorzugsweise weist das Ventilglied, insbesondere das Kegelstück, entlang der Mittelachse des Kegelstücks betrachtet eine im Wesentlichen kreisrunde Außenkontur auf. Es sind aber auch andere Ausgestaltungen des Ventilglieds und/oder des Kegelstücks denkbar. Bevorzugt weist die Dichtkante eine im Wesentlichen kreisrunde Grundform auf.

Vorzugsweise weist der Fluidkanal zumindest bereichsweise, insbesondere im Bereich einer Eintrittsöffnung und/oder einer Austrittsöffnung des Fluidkanals, eine runde, insbesondere kreisrunde und/oder elliptische, Querschnittsfläche auf. Hierdurch können Reibungsverluste im Fluidkanal minimiert bzw. verhindert werden. Es ist denkbar, dass sich die Form der Querschnittsfläche des Fluidkanals im Wesentlichen gleichmäßig ausgebildet ist oder sich von der Eintrittsöffnung zur Austrittsöffnung hin verändert. Beispielsweise ist denkbar, dass der Fluidkanal vorzugsweise an der Austrittsöffnung eine andere Querschnittsfläche aufweist, wie an der Eintrittsöffnung. Vorzugsweise ist der Fluidkanal derart ausgebildet, dass Prozessfluid bei einem Durchströmen des Fluidkanals aus der, insbesondere im Bereich der Ausnehmung angeordneten, Austrittsöffnung auf die Dichtkante gerichtet geleitet wird. Es sind auch komplexere Geometrien bei der Ausgestaltung des Fluidkanals denkbar, welche insbesondere mit dem additiven Fertigungsverfahren vorteilhaft einfach und kostengünstig hergestellt werden können. Beispielsweise ist denkbar, dass der Fluidkanal zumindest bereichsweise eine tropfenförmige, X-förmige, sternförmige oder eine andere Querschnittsfläche aufweist.

Des Weiteren wird vorgeschlagen, dass der Fluidkanal zumindest eine Austrittsöffnung aufweist und im Bereich der Austrittsöffnung eine Querschnittsfläche ausbildet, die eine maximale Längserstreckung aufweist, wobei die maximale Längserstreckung der Querschnittsfläche in dem Bereich der Austrittsöffnung in einer die Mittelachse des Kegelstücks umfassenden Projektionsebene betrachtet im Wesentlichen senkrecht zur Mittelachse des Kegelstücks ausgerichtet ist und größer ist als eine im Wesentlichen senkrecht zur maximalen Längserstreckung ausgerichtete maximale Quererstreckung der Querschnittsfläche. Es können vorteilhafte Strömungseigenschaften in einem Bereich vor der Drosselstelle bzw. der Dichtkante erreicht werden. Insbesondere kann Prozessfluid nach einem Durchströmen des Fluidkanals an der Austrittsöffnung zu einem Durchströmen der Drosselstelle an der Dichtkante über einen vorteilhaft großen Bereich parallel zur Dichtkante verteilt werden. Insbesondere ist die maximale Längserstreckung der Querschnittsfläche des Fluidkanals in dem Bereich der Austrittsöffnung größer als eine sich zu der maximalen Längserstreckung der Querschnittsfläche des Fluidkanals in dem Bereich der Austrittsöffnung senkrecht erstreckende maximale Breite der Querschnittsfläche des Fluidkanals in dem Bereich der Austrittsöffnung, die insbesondere im Wesentlichen parallel zur Mittelachse des Kegelstücks ausgerichtet ist.

Ein weiterer Aspekt der Erfindung betrifft ein Stellventil für eine prozesstechnische Anlage, umfassend einen Ventilsitz und ein erfindungsgemäßes Ventilglied. Das Stellventil umfasst vorzugsweise eine, insbesondere pneumatische oder elektrische, Antriebseinheit, die dazu vorgesehen ist, das Ventilglied relativ zum Ventilsitz zu bewegen. Das Stellventil umfasst insbesondere die Ventilstange, welche das Ventilglied mit der Antriebseinheit verbindet.

Gemäß einer weiteren vorteilhaften Ausbildungsform der Erfindung weist der Fluidkanal zumindest eine Austrittsöffnung auf, wobei der Fluidkanal im Bereich der Austrittsöffnung eine Mittelachse aufweist, die entlang der Mittelachse des Kegelstücks betrachtet, im Wesentlichen parallel zu einer Prozessströmungsrichtung des Stellventils ausgerichtet ist. Insbesondere ist die Austrittsöffnung, insbesondere entlang der Mittelachse des Kegelstücks betrachtet, an einer der Ausgangsöffnung zugewandten Außenseite des Ventilglieds, insbesondere des Kegelstücks, angeordnet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine seitliche Schnittansicht eines Stellventils mit einer ersten erfindungsgemäßen Ausführungsform eines Ventilglieds;
- Fig. 2: eine seitliche Schnittansicht einer zweiten erfindungsgemäßen Ausführungsform eines Ventilglieds;
- Fig. 3: eine Untersicht der zweiten erfindungsgemäßen Ausführungsform des Ventilglieds;
- Fig. 4a: eine Untersicht einer dritten erfindungsgemäßen Ausführungsform eines Ventilglieds mit einer Schnittlinie D-D;
- Fig. 4b: eine seitliche Schnittansicht nach Fig. 4a;
- Fig. 5a: eine Untersicht nach Fig. 4a mit einer Schnittlinie E-E, und
- Fig. 5b: eine seitliche Schnittansicht nach Fig. 5a.

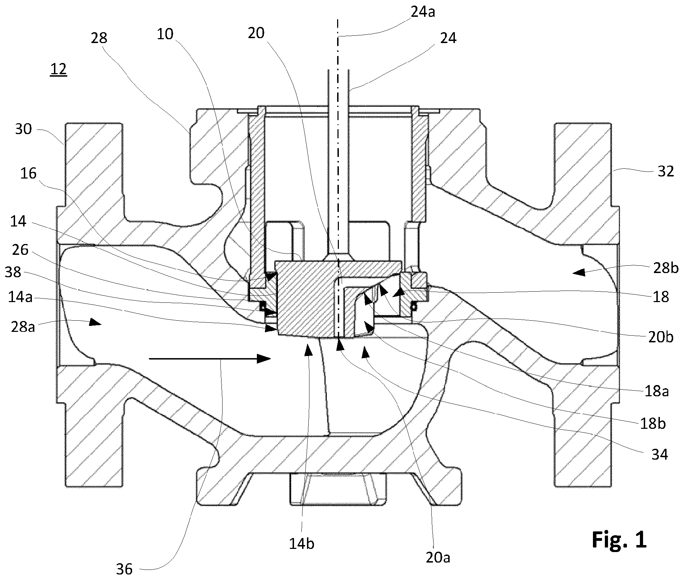

Die Fig. 1 bis 5b zeigen jeweils ein Ventilglied 10 für ein Stellventil 12, umfassend ein Kegelstück 14, das eine Dichtkante 16 aufweist. Das Kegelstück 14 bildet drei Ausnehmungen 18 mit jeweils einer Ausnehmungsfläche 18b aus, wobei insbesondere die Ausnehmungsflächen 18b jeweils eine der Ausnehmungen 18 begrenzen. Das Ventilglied 10 umfasst einen Fluidkanal 20, der von dem Kegelstück 14 begrenzt ist.

Das Kegelstück 14 ist im Wesentlichen zylindrisch ausgebildet und weist eine Umfangsfläche und eine Stirnfläche 14b auf. Die Ausnehmungen 18 sind in einen Bereich der Umfangsfläche eingebracht. Die Umfangsfläche erstreckt sich zumindest teilweise umfänglich um eine Mittelachse 40 des Kegelstücks 14. Die Ausnehmungen 18 erstrecken sich von einer Stirnfläche 14b des Kegelstücks 14 in Richtung der Dichtkante 16. Die Ausnehmungen 18 erstrecken sich jeweils in axialer Richtung entlang der Achse 24a bis hin zur Stirnfläche 14b, wobei insbesondere die axiale Richtung im Wesentlichen parallel zu der Mittelachse 40 des Kegelstücks 14 ausgerichtet ist. Zwischen benachbarten Ausnehmungen 18 ist jeweils ein Steg 22 mit einer axial sich erstreckenden Führungsfläche 38 des Kegelstücks 14 vorgesehen.

Der Fluidkanal 20 weist eine Eintrittsöffnung 20a im Bereich der Stirnfläche 14b und eine oder mehrere Austrittsöffnung(en) 20b im Bereich der Ausnehmungsfläche 18b oder einer Führungsfläche 38 auf.

Die Fig. 1 zeigt eine seitliche Schnittansicht eines Stellventils 12 einer ersten Ausführungsform des Kegelstücks 14. Das Stellventil 12 weist das Ventilglied 10 auf, das mit einer Ventilstange 24 verbunden ist. Das Stellventil 12 umfasst einen Ventilsitz 26 und ein Ventilgehäuse 28, das mit einer Eingangsöffnung 28a und einer Ausgangsöffnung 28b versehen ist. Die Eingangsöffnung 28a des Ventilgehäuses 28 ist durch einen Eintrittsflansch 30 und die Ausgangsöffnung 28b durch einen Austrittsflansch 32 ausgebildet. Die Eingangsöffnung 28a und die Ausgangsöffnung 28b sind durch das Ventilgehäuse 28 hindurch über eine Drosselstelle 34 im Bereich des Ventilsitzes 26 strömungstechnisch miteinander verbunden.

Das Ventilglied 10 wird durch die Ventilstange 24 axial im Ventilgehäuse 28 entlang einer Stellachse 24a geführt, insbesondere relativ zum Ventilsitz 26. Das Ventilglied 10 liegt in einem geschlossenen Zustand des Stellventils 12 über die Dichtkante 16 an dem Ventilsitz 26 an. Das Ventilglied 10 kann im Betrieb zumindest zwei verschiedene Betriebszustände aufweisen. In einer Verschlussstellung liegt die Dichtkante 16 an der in axialer Richtung entlang der Stellachse 24a der Ventilstange 24 zugewandten Seite des Ventilsitzes 26 an und dichtet die Drosselstelle 34 ab, sodass kein Prozessfluid die Drosselstelle 34 in Prozessstromrichtung 36 durchströmen kann. In einer Offenstellung liegt die Dichtkante 16 an der in axialer Richtung entlang der Stellachse 24a der Ventilstange 24 zugewandten Seite des Ventilsitzes 26 nicht an, sodass ein Prozessfluid die Drosselstelle 34 in Prozessstromrichtung 36 durchströmen kann. In Fig. 1 ist der Verschlusszustand dargestellt.

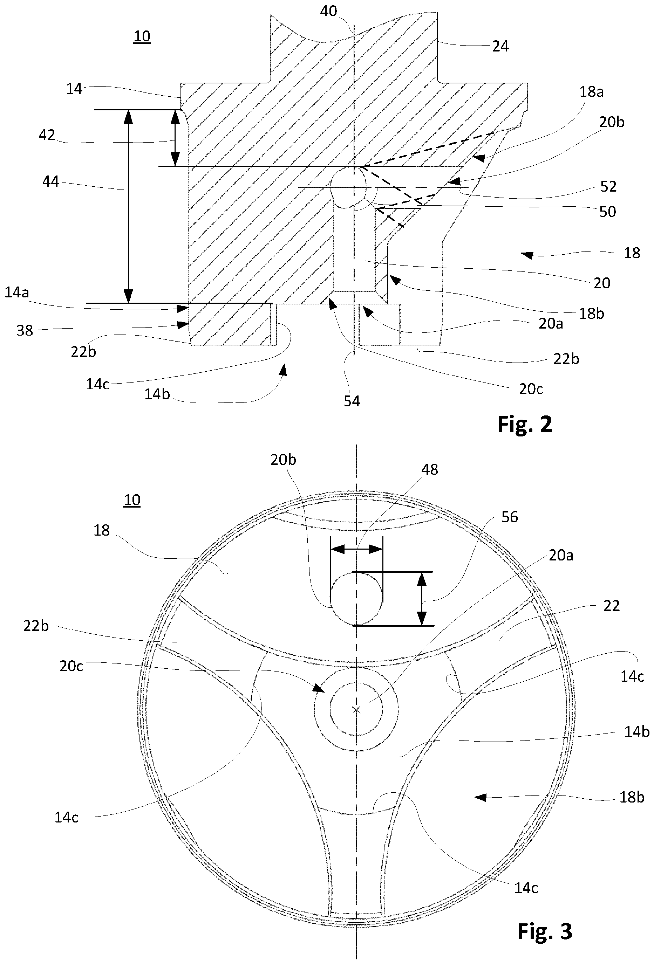

Das Kegelstück 14 bildet den Fluidkanal 20 aus. Der Fluidkanal 20 erstreckt sich von der Eintrittsöffnung 20a im Bereich der Stirnfläche 14b bis zur Austrittsöffnung 20b an der Außenseite. Die Austrittsöffnung 20b liegt dabei im Bereich der Ausnehmungsfläche 18b. Ein erster Teil des Fluidkanals 20 verläuft von der Eintrittsöffnung 20a des Fluidkanals 20 im Wesentlichen geradlinig bis zu einer Krümmung, an der sich der Fluidkanal 20 um einen Winkel 50 von der Mittlachse 40 weg neigt. In einem zweiten Teil des Fluidkanals 20, der sich von der Krümmung bis zur Austrittsöffnung 20b erstreckt, ist der Fluidkanal 20 im Wesentlichen geradlinig ausgebildet. Der Winkel 50 zwischen der Mittelachse 40 des Kegelstücks 14 und einer Mittelachse 52 des Fluidkanals 20 im Bereich der Austrittsöffnung 20b beträgt in der gezeigten Ausgestaltung im Wesentlichen 90°. Es sind jedoch auch Ausgestaltungen denkbar, wobei der Winkel 50 von 90° verschieden ausgebildet ist. Zwei solcher möglichen Ausgestaltungen sind in Fig. 2 schematisch angedeutet gezeigt. Insbesondere kann der zweite Teil des Fluidkanals 20 bzw. der Fluidkanal 20 im Bereich der Austrittsöffnung 20b zur Dichtkante 16 hin geneigt oder von der Dichtkante 16 weg geneigt ausgebildet sein. Insbesondere beträgt der Winkel 50 in einer geneigten Ausgestaltung des Fluidkanals 20 bis zu 60° bzw. 120°. Der Fluidkanal 20 weist eine gleichmäßige Querschnittsfläche auf, die insbesondere eine im Wesentlichen kreisrunde Form aufweist. Es sind jedoch auch andere Geometrien des Fluidkanals 20 denkbar, beispielsweise mit einer gebogenen Erstreckung, mit einer sich verändernden Querschnittsfläche und/oder mit einer elliptischen, quadratischen und/oder einer anderen Form der Querschnittsfläche.

Der Fluidkanal 20 kann derart ausgebildet sein, dass die Mittelachse 52 im Bereich der Austrittsöffnung 20b und eine Mittelachse 54 des Fluidkanals 20 im Bereich der Eintrittsöffnung 20a in zumindest einer Ebene betrachtet im Wesentlichen schräg oder senkrecht zueinander ausgerichtet sind.

Das Kegelstück 14 ist derart ausgebildet, dass die Austrittsöffnung 20b entlang der Mittelachse 40 des Kegelstücks 14 betrachtet in einem minimalen Abstand 42 von der Dichtkante 16 angeordnet ist, der kleiner oder gleich 66 %, vorzugsweise kleiner oder gleich 50 %, einer axialen Erstreckung 44 des Kegelstücks 14 von der Dichtkante 16 zur Stirnfläche 14b beträgt.

Das Kegelstück 14 ist vorzugsweise durch ein additives Fertigungsverfahren gefertigt.

Die Ausnehmung 18 ist als ein Teilkreissektor der Grundfläche des Kegelstücks 14. Im oberen Teil, insbesondere im Bereich der Dichtkante 16, des Kegelstücks 14 in Bezug auf die Stellachse 24a weist die Ausnehmung 18 eine Abschrägung 18a auf, wobei die Abschrägung 18a in Richtung des Austrittsflansch 30 orientiert ist. Die Abschrägung 18a erstreckt sich von unterhalb der Dichtkante 16, insbesondere beabstandet von der Dichtkante 16, entlang der Mittelachse 40 des Kegelstücks 14 von der Dichtkante 16 weg, wobei sich insbesondere ein Querschnitt des Kegelbereichs 14 im Bereich der Ausnehmung 18 durch die Abschrägung 18a verjüngt.

In der Fig. 2 ist eine seitliche Schnittansicht der ersten, erfindungsgemäßen Ausführungsform des Ventilglieds 10 dargestellt. Die Eintrittsöffnung 20a des Fluidkanals 20 weist eine Fase 20c auf. Alternativ oder zusätzlich ist denkbar, dass eine Kante um die Eintrittsöffnung 20a gerundet ausgebildet ist. Alternativ oder zusätzlich ist denkbar, dass das Kegelstück 14 im Bereich der Austrittsöffnung 20b eine Fase 20c aufweist und/oder abgerundet ausgebildet ist. Die Stege 22b stehen jeweils entlang der Mittelachse 40 des Kegelstücks 14 an einer Stirnseite des Kegelstücks 14 über die Stirnfläche 14b hinweg hervor.

Die Fig. 3 zeigt eine Untersicht einer zweiten Ausführungsform des Ventilglieds 10.

Die Eintrittsöffnung 20a des Fluidkanals 20 liegt konzentrisch zur Achse 24a des Kegelstücks 14. Es sind drei Ausnehmungen 18 in das Kegelstück 14 eingebracht, welche insbesondere die Form der Stirnfläche 14b bestimmen. Die Ausnehmungen 18 werden jeweils durch einen Steg 22 voneinander getrennt. Die Stege 22 sind über einen Absatz 14c in der Stirnfläche 14b über diesen miteinander verbunden und bilden eine sternförmige Anordnung. Die Ausnehmungsflächen 18b begrenzen jeweils eine der Ausnehmungen 18 und bilden Seitenflächen 14a des Kegelstücks 14. Die Ausnehmungsflächen 18b weisen jeweils eine abgerundete Form auf. Die Eintrittsöffnung 20a liegt innerhalb der Stirnfläche 14b zwischen den Ausnehmungen 18. Alternativ sind auch Ausgestaltungen des Kegelstücks 14 mit einer von drei verschiedenen Anzahl an Ausnehmungen 18 denkbar.

Die Austrittsöffnung 20b des Fluidkanals 20 liegt im Bereich einer der Ausnehmungsflächen 18b. Der Querschnitt des Fluidkanals 20 ist durchgehend kreisförmig ausgebildet. Der Fluidkanal 20 bildet im Bereich der Austrittsöffnung 20b eine Querschnittsfläche aus, die eine maximale Längserstreckung 48 aufweist, wobei die maximale Längserstreckung 48 einer maximalen Quererstreckung 56 der Querschnittsfläche entspricht. Die maximale Längserstreckung 48 der Querschnittsfläche des Fluidkanals 20 im Bereich der Austrittsöffnung 20b ist in einer die Mittelachse 40 des Kegelstücks 14 umfassenden Projektionsebene betrachtet (seitlich) im Wesentlichen senkrecht zur Mittelachse 40 des Kegelstücks 14 ausgerichtet. In einer bevorzugten Ausgestaltung ist denkbar, dass die maximale Längserstreckung 48 der Querschnittsfläche des Fluidkanals 20 im Bereich der Austrittsöffnung 20b größer ist als eine im Wesentlichen senkrecht zur maximalen Längserstreckung 48 ausgerichtete maximale Quererstreckung 56 der Querschnittsfläche.

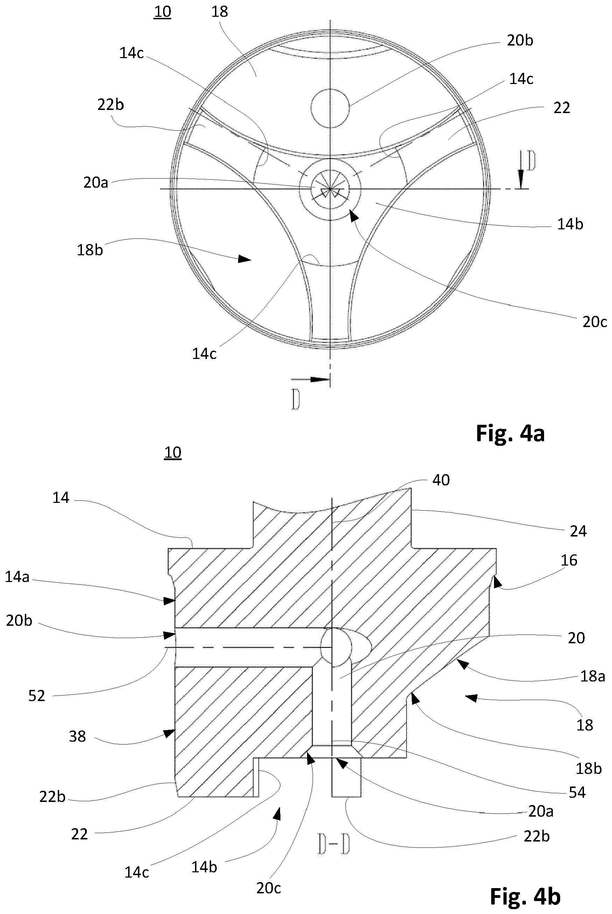

In der Fig. 4a ist eine Untersicht einer dritten Ausführungsform des Ventilglieds 10 dargestellt. Es ist eine Schnittlinie D-D eingetragen, die einen Viertelkreis der Stirnfläche 14b begrenzt.

In Fig. 4b ist eine Schnittansicht nach der Schnittlinie D-D der dritten Ausführungsform eines Ventilglieds 10 dargestellt.

Die dritte Ausführungsform des Ventilglieds 10 weist eine mit der Stellachse 24a konzentrische Eintrittsöffnung 20a eines Fluidkanals 20 und zwei Austrittsöffnungen 20b auf. Eine Austrittsöffnung 20b ist, insbesondere wie in den bereits beschriebenen Ausführungsformen, im Bereich einer der Ausnehmungen 18 angeordnet. Die andere Austrittsöffnung 20b befindet sich im Bereich einer Führungsfläche 38. Die Führungsflächen 38 sind jeweils an den radial äußeren Enden der Stege 22 in axialer Richtung entlang der Mittelachse 40 des Kegelstücks 14 von einem Ende des Kegelstücks 14 bis zur Dichtkante 16 ausgebildet.

Der Fluidkanal 20 weist somit zwei waagrechte Äste bzw. Verläufe auf, die sich von der Krümmung des Fluidkanals 20 jeweils zu den Austrittsöffnungen 20b des Fluidkanals 20 erstrecken. Der Fluidkanal 20 erstreckt sich von der Eintrittsöffnung 20a bis zur Krümmung als ein einzelner axial verlaufender Ast entlang der Mittelachse 40 des Kegelstücks 14.

Der Fluidkanal 20 kann auch mehr als zwei waagrechte Äste oder mehr als zwei axiale Äste aufweisen. Insbesondere sind Ausgestaltungen mit mehr als einem Fluidkanal 20 denkbar, wobei insbesondere die Fluidkanäle 20 innerhalb des Kegelstücks 14 voneinander getrennt ausgebildet sein können.

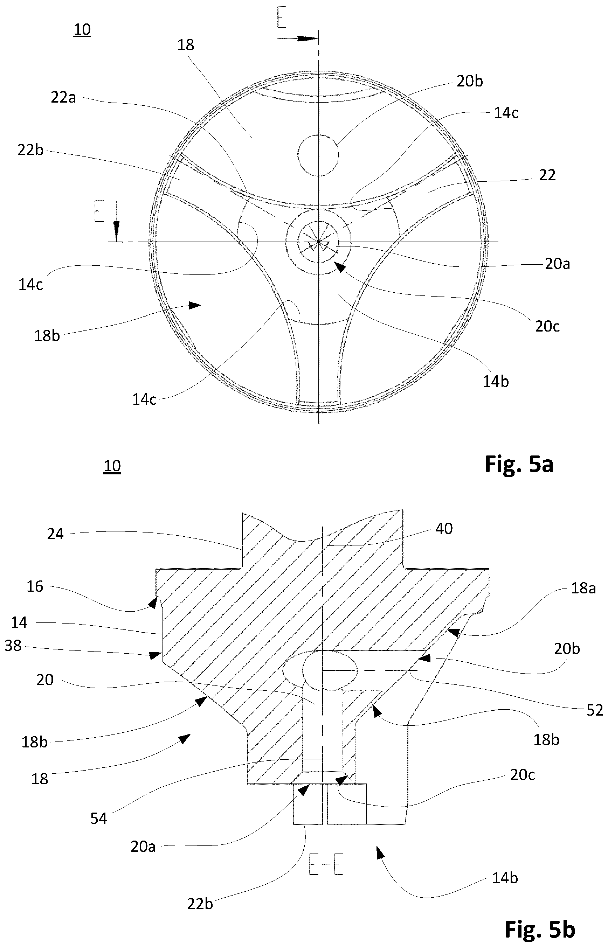

Die Fig. 5a zeigt eine Untersicht nach Fig. 4a, wobei eine Schnittlinie E-E eingetragen ist.

In der Fig. 5b ist eine seitliche Schnittansicht nach Fig. 5a entlang der Schnittlinie E-E dargestellt.

Die Fig. 5b zeigt den zweiten Ast des Fluidkanals 20 der mit der Austrittsöffnung 20b in einer der Ausnehmungen 18 im Bereich der Ausnehmungsfläche 18b endet.

Durch die Ausbildung der V-Port Ventilglieder 10 mit Fluidkanälen 20, die unterhalb der Dichtkante 16 im Bereich der Ausnehmung 18 enden, wird ein vorteilhaft hoher Durchfluss im Öffnungszustand des Stellventils 12 erreicht, insbesondere da Querschnittsverluste aufgrund der benötigten Führungsflächen 38 der Stege 22 kompensiert werden können. Des Weiteren werden Wirbelbildungen zwischen Ventilsitz 26 und Ventilglied 10 verhindert bzw. reduziert. Weiterhin wird Gewicht eingespart. Durch Austrittsöffnungen 20b im Bereich der Führungsflächen 38 können Reibungseffekte und ein Verkanten des Ventilglieds 10 innerhalb des Stellventils 12 vorteilhaft verhindert werden.

### Bezugszeichenliste

- 10: Stellventil
- 12: Ventilglied
- 14: Kegelstück
- 14a: Seitenfläche des Kegelstücks 14
- 14b: Stirnfläche des Kegelstücks 14
- 14c: Absatz in der Stirnfläche 14b
- 16: Dichtkante
- 18: Ausnehmung
- 18a: Abschrägung der Ausnehmung 18
- 18b: Ausnehmungsfläche
- 20: Fluidkanal
- 20a: Eintrittsöffnung des Fluidkanals 20
- 20b: Austrittsöffnung des Fluidkanals 20
- 20c: Fase des Fluidkanals 20
- 22: Steg
- 22a: Seitenwand des Stegs 22
- 22b: Vorsprung des Stegs 22
- 24: Ventilstange
- 24a: Stellachse
- 26: Ventilsitz
- 28: Ventilgehäuse
- 28a: Eingangsöffnung des Ventilgehäuses 28
- 28b: Ausgangsöffnung des Ventilgehäuses 28
- 30: Eintrittsflansch
- 32: Austrittsflansch
- 34: Drosselstelle
- 36: Prozessstromrichtung
- 38: Führungsfläche
- 40: Mittelachse des Kegelstücks 14
- 42: Abstand
- 44: Erstreckung des Kegelstücks 14
- 48: Längserstreckung
- 50: Winkel
- 52: Mittelachse der Austrittsöffnung 20b
- 54: Mittelachse der Eintrittsöffnung 20a
- 56: Quererstreckung

## Patentansprüche

1. Ventilglied (10) für ein Stellventil (12) einer prozesstechnischen Anlage, mit einem Kegelstück (14), das eine Dichtkante (16) ausbildet, die für ein Zusammenwirken mit einem Ventilsitz (26) des Stellventils (12) vorgesehen ist, und mit zumindest einer Stirnfläche (14b), die insbesondere das Kegelstück (14) an einer Seite zumindest teilweise begrenzt, wobei das Kegelstück (14) zur Veränderung eines Öffnungsquerschnitts zumindest einer Drosselstelle (34) des Stellventils (12) in Abhängigkeit einer axialen Stellung des Ventilglieds (10) dient, wobei das Kegelstück (14) in und/oder an einer relativ zu einer Mittelachse (40) des Kegelstücks (14) ausgebildeten Umfangsfläche zumindest eine Ausnehmung (18) ausbildet, die insbesondere dazu vorgesehen ist, den Öffnungsquerschnitt der Drosselstelle (34) in Abhängigkeit von der axialen Stellung des Ventilglieds (10) gegenüber dem Ventilsitz (26) zu beeinflussen, wobei die Ausnehmung (18) zumindest teilweise von einer Ausnehmungsfläche (18b) begrenzt ist, **gekennzeichnet durch,** dass zumindest ein Fluidkanal (20) ausgebildet ist, der von dem Kegelstück (14) begrenzt ist und sich von der Stirnfläche (14b) durch das Kegelstück (14) hindurch bis zu einer Seitenfläche (14a) des Kegelstücks (14) erstreckt, wobei die Seitenfläche (14a) entlang der Mittelachse des Kegelstücks (14) betrachtet vor der Dichtkante (16) angeordnet ist.

2. Ventilglied nach Anspruch 1, **dadurch gekennzeichnet, dass** der Fluidkanal (20) eine an der Stirnfläche (14b) angeordnete Eintrittsöffnung (20a) und eine Austrittsöffnung (20b) umfasst, wobei die Austrittsöffnung (20b) entlang der Mittelachse des Kegelstücks (14) betrachtet in einem minimalen Abstand (42) von der Dichtkante (16) angeordnet ist, der kleiner oder gleich 66 % einer axialen Erstreckung (44) des Kegelstücks (14) von der Dichtkante (16) zur Stirnfläche (14b) beträgt.

3. Ventilglied nach Anspruch 1 oder 2, **dadurch gekennzeichnet, dass** der Fluidkanal (20) eine an der Stirnfläche (14b) angeordnete Eintrittsöffnung (20a) und eine Austrittsöffnung (20b) umfasst, wobei die Austrittsöffnung (20b) im Bereich der Ausnehmung (18), insbesondere in der Ausnehmungsfläche (18b), angeordnet ist.

4. Ventilglied nach einem der vorangehenden Ansprüche, **dadurch gekennzeichnet, dass** der Fluidkanal (20) eine an der Stirnfläche (14b) angeordnete Eintrittsöffnung (20a) und eine Austrittsöffnung (20b) umfasst, wobei zumindest eine Umfangsfläche des Kegelstücks (14) als eine Führungsfläche (38) ausgebildet ist, wobei die Austrittsöffnung (20b) in einem Bereich der Führungsfläche (38), insbesondere beabstandet von der Ausnehmung (18) und/oder der Ausnehmungsfläche (18b), angeordnet ist.

5. Ventilglied nach einem der vorangehenden Ansprüche, **dadurch gekennzeichnet, dass** der Fluidkanal (20) eine an der Stirnfläche (14b) angeordnete Eintrittsöffnung (20a) und eine Austrittsöffnung (20b) umfasst, wobei die Eintrittsöffnung (20) entlang der Mittelachse (40) des Kegelstücks (14) betrachtet im Wesentlichen mittig auf der Mittelachse (40) des Kegelstücks (14) angeordnet ist.

6. Ventilglied nach einem der vorangehenden Ansprüche, **dadurch gekennzeichnet, dass** der Fluidkanal (20) zumindest eine Austrittsöffnung (20b) umfasst und im Bereich der Austrittsöffnung (20b) eine Mittelachse (52) aufweist, die zur Mittelachse (40) des Kegelstücks (14) in einem von 90° verschiedenen Winkel (50), vorzugsweise zur Dichtkante (16) hin geneigt, ausgerichtet ist.

7. Ventilglied nach einem der vorangehenden Ansprüche, **dadurch gekennzeichnet, dass** das Kegelstück (14) mehrere Fluidkanäle (20) aufweist, die sich jeweils von einer Fläche des Kegelstücks (14), insbesondere der Stirnfläche (14b) des Kegelstücks (14) durch das Kegelstück (14) hindurch bis zu einer Seitenfläche (14a) des Kegelstücks (14) erstrecken.

8. Ventilglied nach einem der vorangehenden Ansprüche, **dadurch gekennzeichnet, dass** der Fluidkanal (20) eine an der Stirnfläche (14b) angeordnete Eintrittsöffnung (20a) und mehrere Austrittsöffnungen (20b) umfasst, wobei die Austrittsöffnungen (20b) jeweils an einer Seitenfläche (14a) des Kegelstücks (14) angeordnet sind.

9. Ventilglied nach einem der vorangehenden Ansprüche, **dadurch gekennzeichnet, dass** zumindest das Kegelstück (14) mittels eines additiven Fertigungsverfahrens hergestellt ist.

10. Ventilglied nach einem der vorangehenden Ansprüche, **dadurch gekennzeichnet, dass** der Fluidkanal (20) zumindest bereichsweise, insbesondere im Bereich einer Eintrittsöffnung (20a) und/oder einer Austrittsöffnung (20b) des Fluidkanals (20), eine runde, insbesondere kreisrunde und/oder elliptische, Querschnittsfläche aufweist.

11. Ventilglied nach einem der vorangehenden Ansprüche, **dadurch gekennzeichnet, dass** der Fluidkanal (20) zumindest eine Austrittsöffnung (20b) aufweist und im Bereich der Austrittsöffnung (20b) eine Querschnittsfläche ausbildet, die eine maximale Längserstreckung (48) aufweist, wobei die maximale Längserstreckung (48) in einer die Mittelachse (40) des Kegelstücks (14) umfassenden Projektionsebene betrachtet im Wesentlichen senkrecht zur Mittelachse (40) des Kegelstücks (14) ausgerichtet ist und größer ist als eine im Wesentlichen senkrecht zur maximalen Längserstreckung (48) ausgerichtete maximale Quererstreckung (56) der Querschnittsfläche.

12. Stellventil (12) für eine prozesstechnische Anlage, umfassend einen Ventilsitz (26) und ein Ventilglied (10) nach einem der vorangehenden Ansprüche.

13. Stellventil nach Anspruch 12, **dadurch gekennzeichnet, dass** der Fluidkanal (20) zumindest eine Austrittsöffnung (20b) aufweist, wobei der Fluidkanal (20) im Bereich der Austrittsöffnung (20b) eine Mittelachse (52) aufweist, die entlang der Mittelachse (40) des Kegelstücks (14) betrachtet im Wesentlichen parallel zu einer Prozessströmungsrichtung (32) des Stellventils (12) ausgerichtet ist.
